# EUROPEAN PATENT APPLICATION

(11) **EP 2 458 299 A2**
(43) Date of publication of application: **30.05.2012**
(21) Application number: 11188280.9
(22) Date of filing: 08.11.2011
(51) Int. Cl.: F24H 1/48, F24H 1/50, F24H 8/00, F24H 9/02

(54) **A heater**

(30) Priority: 24.11.2010 GB 201019888
(71) Applicant: Zenex Technologies Limited, Exeter, Devon EX1 1NT (GB)
(72) Inventor: Farrell, Christopher, Braunton, Devon EX32 2DE (GB)
(74) Representative: Beck, Simon Antony

(57) **Abstract**

A heater, comprising a fuel burner, a primary heat exchanger, and an enclosure around the fuel burner and primary heat exchanger and defining a gas flow path, wherein the enclosure further comprises a secondary heat exchanger and/or heat storage means.

## Description

### FIELD OF THE INVENTION

The present invention relates to a heater, also known as a boiler.

### BACKGROUND OF THE INVENTION

Buildings, both domestic and commercial, often use a heater or boiler to warm water for both space heating and for washing or showering purposes. Such boilers generally comprise a manifold which is supplied with fuel. The fuel is then directed to burners where it escapes into an air stream so as to be combusted. A primary heat exchanger is provided in close proximity with the burners such that a liquid circulating with the primary heat exchanger is warmed. The liquid is normally water. The combustion products are then vented to the environment via a flue or chimney.

The combustion products still have useful heat in them and it is known to seek to recover heat from the flue gas via a secondary heat exchanger. The secondary heat exchangers are normally separate units which are placed "downstream" in gas flow terms from the boiler. Such an arrangement is described in US 7,415,944.

It is known to provide a water jacket around a burner so that heat from the burner is captured in the jacket. Such an arrangement is shown in DE 19715411, G 9313026.6 and EP 0674140. Systems where water surrounds a flue, and where transfer across the flue is primary heating means are disclosed in EP 0644382 and DE 4434298.

### SUMMARY OF THE INVENTION

According to a first aspect of the present invention there is provided a heater comprising a fuel burner, a primary heat exchanger and an enclosure around the fuel burner and the primary heat exchanger and defining a gas flow path, wherein the enclosure further comprises a secondary heat exchanger and/or heat storage means, and a volume within the enclosure replenished by condensate from the gas flow path or grey water.

The inventor has realised that the cost of manufacture of a boiler can be reduced by combining the secondary heat exchanger with an enclosure around the fuel burner(s).

The enclosure defines a chamber for holding a heat storage material. The enclosure may be provided as a double walled vessel with the space between the walls defining the chamber. However, safety considerations need to be addressed, and in order to avoid build up of pressure the enclosure is "open", in that it can equalise its internal pressure within the prevailing atmospheric pressure.

Advantageously the enclosure defines a gas inlet path for the admission of air towards the burner, and a flue gas outlet path such that combustion products can be removed from the boiler.

In use, the heat storage material allows heat from the flue gas to be removed from the flue gas and stored within the heat storage material. It would be possible to achieve this effect by making the walls of the vessel from thick metal, but such an arrangement would be costly. It would also be heavy making installation of the boiler more difficult. Advantageously the heat storage material is non-metallic. The heat storage material may, for example, be water or condensate condensed from the combustion products of the heater. This allows the chamber to be vented, which is good from a safety point of view, whilst being filled with a readily available an inexpensive material. In some embodiments the chamber may be filled with or include a phase change material which undergoes a phase change between 20° and 60°C. Suitable materials include paraffins and waxes which undergo phase changes, although more modern materials include calcium chloride hexahydrate which undergoes a phase change at about 28°C. In such an embodiment a further chamber may be formed interposed between the chamber holding the phase change material and the gas flow path such that the further chamber is filled with water or condensate. Thus the further chamber acts as an intermediate chamber to allow heat to be transferred to the phase change material, but to protect it from excess heat if, for example, the water or condensate in the further chamber evaporates away.

In an alternative arrangement, the enclosure may be provided with inlet and outlet paths such that it can receive waste water, so called "grey water" from sinks, showers and/or baths. This water may give its heat up to the secondary heat exchanger.

The provision of the enclosure acts as a thermal barrier restricting the temperature that is experienced by components outside of the enclosure. For example where the enclosure is filled with condensate or grey water, it follows that the temperature at the exterior of the enclosure will not significantly exceed 100°C, even in the event of a major fault in the boiler that kept it working at its maximum fuel burning capacity.

This means that more design choice is available as to properties of the materials used to form the enclosure. Thus, in the preferred embodiment the outermost wall of the enclosure can be made from a non-metallic material, thereby reducing costs and/or improving the corrosion resistance of the boiler as the outer material can be corrosion resistant. Thus, the outer wall may be made of plastics, resin, impregnated fibre, treated cloth or other man-made or recycled materials which can give rise to a water impermeable wall. The outer wall does not necessarily have to be rigid although it can be a structural member as it can be arranged to sit within a further enclosure, which can be defined by a wall or a web of other material. The freedom to use materials, such as resin impregnated fibres, also offers the possibility of providing an outer layer which is more insulating than metal.

The inner wall of the enclosure has potential to be exposed to high temperatures in the vicinity of the fuel burner. However these temperatures may be mitigated if a flame shield is placed around the burner to prevent the possibility of flames reaching the inner wall of the enclosure. The inner wall may, for example, be formed of a metal as its properties are well understood. However this does not preclude the use of other materials having sufficient thermal conductivity and heat resistant properties.

In some embodiments of the invention an intermediate baffle may be filled with water. The water may be in communication with water held in the chamber of the double walled vessel. Alternatively the intermediate baffle may have a further heat exchanger disposed on it or may be in the form of a tank holding potable water.

Similarly if steps, such as regular heating or regular flushing are undertaken to inhibit the growth of bacteria the chamber of the double walled vessel may be filled with potable water and the heat exchanger therein can be removed.

The enclosure, by acting as a heat shield, enables a domestic boiler to be constructed with a non-traditional shape and placed in non-traditional places. Domestic boilers are often sized and shaped to fit in cupboards. However, by use of a suitable flue, such as a balanced flue and the enclosure, the boiler could be dimensioned so as to fit in the space underneath floor standing kitchen units (which are normally on short legs) or be made to go between floor joists or ceiling joists.

### BRIEF DESCRIPTION OF THE DRAWINGS

The present invention will now be described, by way of non-limiting example only, with reference to the accompanying Figures, in which:
Figure 1 is a schematic cross section of a heater constituting a first embodiment of the present invention;
Figure 2 is a plan view of the heater of Figure 1;
Figure 3 is a schematic cross section of a second embodiment of the present invention;
Figure 4 shows a typical heating configuration for a boiler;
Figure 5 is a cross-section through a modified intermediate baffle 62 of Figure 1; and
Figure 6 is a cross section through a further embodiment of the invention.

### DESCRIPTION OF PREFERRED EMBODIMENTS OF THE INVENTION

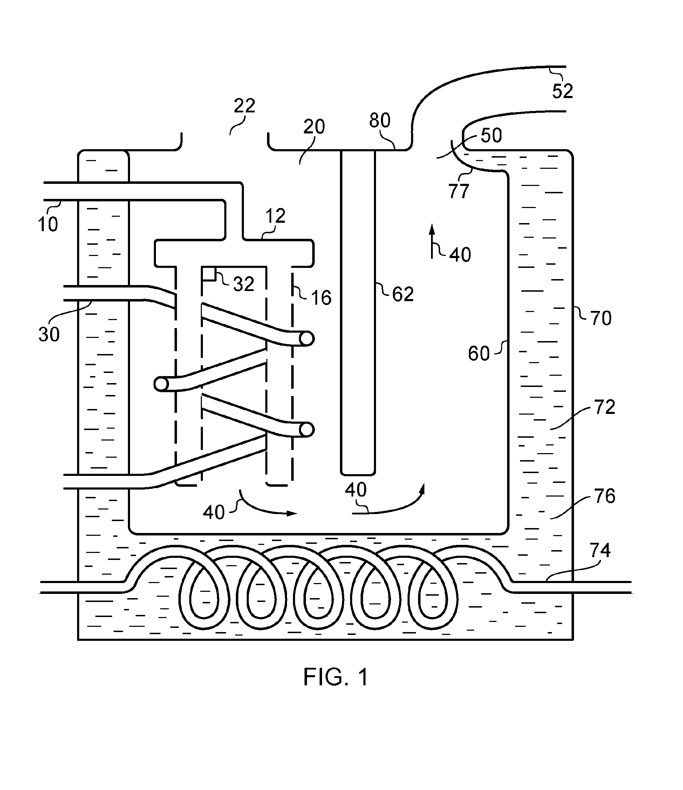

Figure 1 schematically shows a primary and secondary heat exchanger provided within a boiler constituting an embodiment of the present invention. The boiler comprises a fuel inlet pipe 10 which is connected to a fuel manifold 12 for distributing the fuel to a plurality of burners 14 and 16. Although only two burners are shown more may be provided and each may be associated with a respective control valve for throttling the amount of fuel provided to the burner such that the thermal output of the boiler can be regulated in response to signals from a controller (not shown). In this instance the burners are downwardly directed within a first chamber 20 which has an uppermost opening 22 into which air may be blown by a fan (not shown). A primary heat exchanger is provided by a pipe 30 which carries a heat exchange medium, such as water, and which encircles the burners 14 and 16 or meanders around them so as to be in thermally intimate contact such that the water within the pipe 30 is warmed when the burners are in use to combust the fuel supplied along the fuel supply pipe 10. An igniter 32 may be provided adjacent the manifold 12. The igniter may be in form of a pilot light although more modern boilers use electronic ignition in order to ignite the fuel. Warm gas exiting the bottom of the assembly formed by the burners 14 and 16 and the primary heat exchanger 30 flows along the gas flow path as indicated by the arrows 40 and to an outlet orifice 50 which is commonly connected to a outlet pipe typically in the form of a horizontal duct 52.

The gas flow path is defined by a first wall 60 which acts to define an enclosure around the gas burner and primary heat exchanger assembly. An internal wall or baffle 62 is generally provided in order to ensure that the combustion products are forced to flow to the bottom of the enclosure 60 before they can make their way towards the outlet aperture 50.

Although the arrangement described herein has the air inlet and exhaust gas outlet at its uppermost surface, this is for convenience only and the arrangement can in fact be operated in any configuration.

A further wall 70 is provided to cooperate with at least part of the first wall 60 so as to define a chamber 72 which encloses a secondary heat exchanger 74 and a heat transfer medium 76. The heat transfer medium 76 can also serve to store heat for transfer to the secondary heat exchanger 74. The secondary heat exchanger 74 has, for convenience, been shown as being located at the bottom region of the chamber 72 but in reality the pipe 74 could be provided in any portion or portions of the chamber 72.

Advantageously the chamber 72 may be filled with a heat transfer material such as water, which exhibits a relatively high specific heat capacity, and which is inexpensive. The chamber may, if desired, be filled with water and closed in order to stop the water from evaporating. However this does give rise to the possibility of an unvented chamber being exposed to excessive heat which might cause the water therein to boil and pressure within the chamber to build. This can be accommodated by the provision of a pressure release valve or a sealing mechanism that opens once it becomes too warm. Thus, the chamber could be sealed by, for example, a wax pellet or similar.

In a preferred embodiment the chamber 72 is open in an upper region thereof and connected to a condensate feed path 77 which opens into the flue 52 in order to collect condensate that runs back along the flue (as invariably happens in boilers) and to direct the condensate into the chamber 72 thereby ensuring that use of the boiler causes the chamber to remain topped up to a desired operating level. The condensate is warm, so this capturing of the condensate provides a further heat recovery path. A condensate drain aperture (not shown) can be provided at a position remote from the condensate feed path, and connected to a drain, so as to define a "full" level within the chamber 72.

Thus, in use, the hot flue gasses can exchange heat with the wall 60 which conducts heat to the water 76 thereby causing it to warm up. The heat in the water 76 can then be exchanged to liquid flowing within the secondary heat exchanger 74, for example, when a draw of warmed water for washing is required. In this example the enclosure is sealed with a lid 80 which acts to define the air inlet 22, the exhaust outlet 50 and also holds the intermediate baffle 62.

As noted before the external wall 70 need not be made of metal and is advantageously a non-metallic material thereby providing enhanced resistance to corrosion from any acids within the condensate. The outer wall 70 may be made from plastics or rubber or any other suitable waterproof material. The wall does not even need to be rigid and hence could be formed of a cloth or thin walled plastic which can be placed around the inner wall 60 and then supported by a suitable enclosure. These activities enable the weight and cost of the boiler to be reduced.

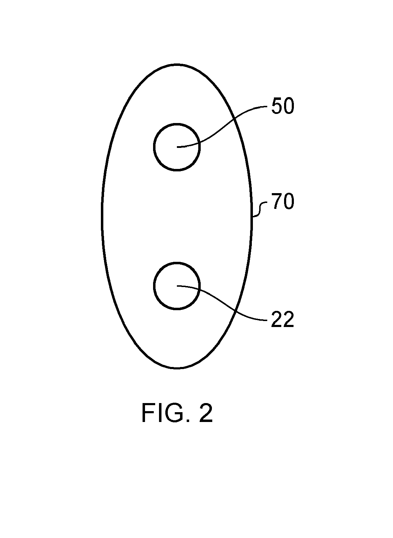

The enclosure does not need to be square or circularly symmetric and manufacturing costs may be reduced by allowing it to take a more elongate or oval shape. Figure 2 is a plan of view of the arrangement shown in Figure 1 in which the enclosure has a generally oval outer wall 70. Furthermore, although the burner assembly has been shown to one side of the arrangement in Figure 1 and the exhaust path to the other side, other geometries are envisaged and for example the burner assembly could be positioned substantially coaxial with an exhaust gas path.

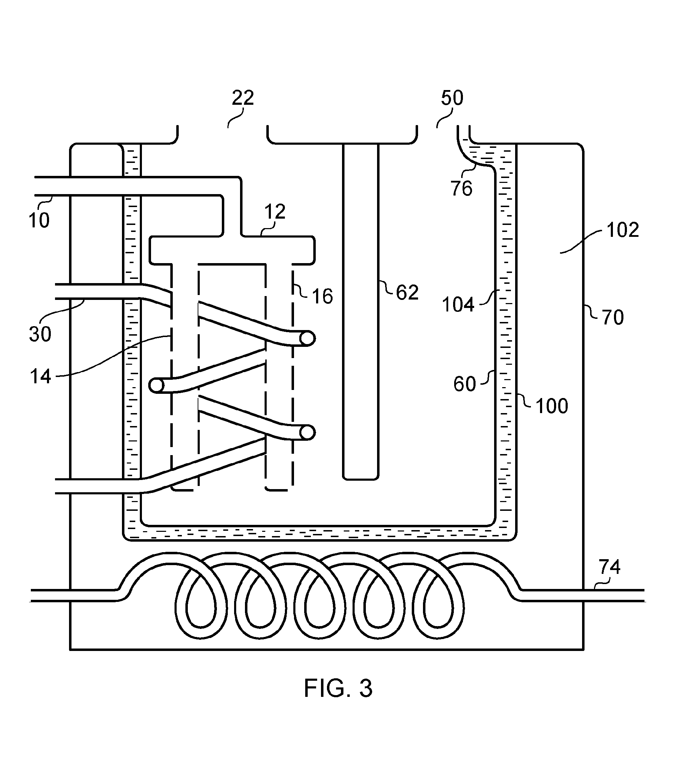

Figure 3 shows a further modification to the arrangement shown in Figure 1. Like parts are designated with like reference numerals. In this modification the enclosure defines two chambers. The chamber housing the secondary heat exchanger 74 is now delimited by the outer wall 70 and an intermediate wall 100. The chamber, now designated 102 may hold a material other than water. The material may be selected to exhibit a phase change at the desired transition temperature. Such suitable materials include paraffin wax, but more preferably calcium chloride hexahydrate which exhibits a phase change at substantially 28°C. An innermost chamber delimited by the wall 100 and the internal wall 60 is filled with water or condensate. Thus this chamber, designated 104 advantageously has a condensate fill path 76 which is in fluid flow communication with condensate returning down the flue 52.

This arrangement, although internally more complex uses the water or condensate to provide an intermediate transfer layer to the phase change material within the chamber 102. This is advantageous as it protects the phase change material from excessive heating since, if the condensate boils out of the chamber 104 then the chamber becomes filled with air which has poor thermal conductivity.

Depending on the phase change material used, the condensate holding chamber 104 may be dispensed with, in which case the configuration returns to that of Figure 1 but with phase change material being disposed within the chamber 72.

Although not shown, a small drain may be provided through the floor of the inner wall 60 to allow any condensate that collects beneath the burners to be drained away.

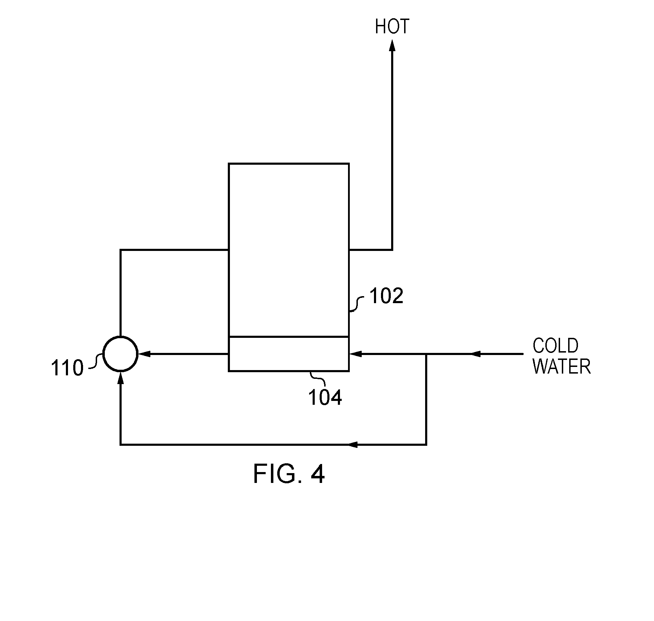

Figure 4 schematically shows water connections to the primary and secondary heat exchangers of the boilers as shown in Figures 1 and 3. In Figure 4 the primary heat exchanger path is designated by the box 102 whereas the secondary heat exchanger path is designated by the box 104. Thus, cold water may be admitted into the secondary heat exchanger 74 directly from the cold water main. However a cold water branch is also provided in parallel with the secondary heat exchanger. Both the parallel cold water branch and water passing through the secondary heat exchanger are provided to respective inputs of a mixing valve 110. The mixing valve 110 may be under the control of an electrically controlled valve, but more generally is a thermostatic valve which acts to blend water passing through the secondary heat exchanger 104 with cold water in order to provide water which is at a target temperature of around 28° to 30°C to the input of the primary heat exchanger 102 whilst the secondary heat exchanger and its thermal store has sufficient heat stored therein. Once the heat store becomes exhausted the valve 110 can no longer control the water temperature at its output and the water temperature starts to drift down towards that of the cold water main. This arrangement allows useful heat to be delivered to the water heating path of the boiler thereby increasing its efficiency. It also has the possibility of allowing the boiler not to fire for relatively small draws of water.

In the embodiments described so far, the baffle 62 has had no special features other than forming a wall to direct the flue gas.

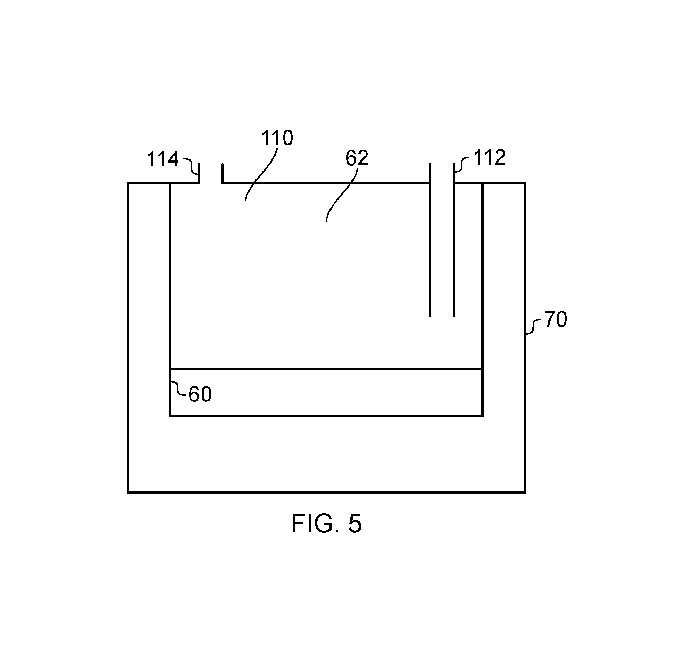

However it could be formed as a double walled vessel enclosing a volume. That volume 110 may contain a heat storage medium and a heat exchanger much like the chamber 72. Alternatively it could be in the form of a tank containing potable water introduced by a first pipe 112 and drawn off by a second pipe 114, as shown in Figure 5. The potable water can be connected in series with the heat exchanger 74.

In the arrangement shown in Figures 1 and 3 the secondary heat exchanger inlet and outlet connections may be ducted to the top of the enclosure such that the enclosure can be easily connected and disconnected from a cooperating member. This enables a modular approach to be taken to building a boiler, and with the provision of shut off valves to the water supply, would make servicing the fuel burner and heat exchanger very easy by allowing the whole enclosure to be removed.

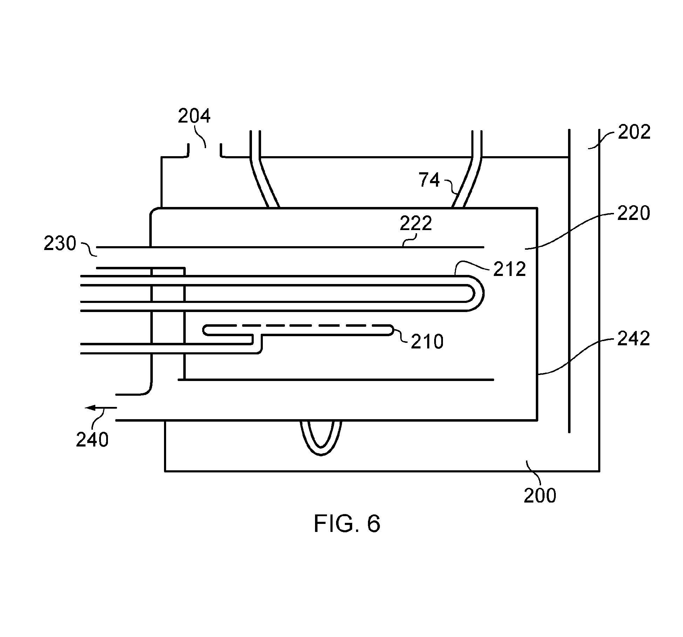

It is also possible for the chamber to be filled with grey water. Figure 6 shows such an arrangement. Here the enclosure is provided as tank 200 having a grey water inlet 202 and an outlet 204. The burner 210 and primary neat exchanger 212 of the boiler are provided in a chamber 220 in combination with an inner sleeve which acts both as a flame shield and a gas flow path member such that air admitted along an inlet path 230 has to flow to the end of the chamber, and then pass against wall 242 of the chamber 220 before exiting at an outlet 240. Although only one burner has been shown for simplicity, multiple burners may be provided so that the output from the boiler can be modulated.

These approaches, of a balanced flue style of construction and a surrounding water filled jacked, mean that the boiler can be made to fit in spaces such as between floor joists thereby reducing both noise and visual impact of the boiler. This is especially important in small dwellings. Similarly such a boiler could be placed beneath furniture, such as a kitchen cabinet.

In the arrangement of Figure 6, a secondary heat exchanger 74 meanders through the grey water to pick up heat therefrom and to transfer it to water contained within a through pipe in the secondary heat exchanger.

It is thus possible to provide a boiler, which by use of a surrounding water jacket and use of a non-metallic outer case, for at least part of the boiler, can be placed in otherwise undesirable operating spaces.

## Claims

1. A heater, comprising
a fuel burner (14, 210),
a primary heat exchanger (30), and
an enclosure (60) around the fuel burner and primary heat exchanger and defining a gas flow path,
wherein the enclosure further comprises a secondary heat exchanger (74) and/or heat storage means, and a volume within the enclosure is filled and/or replenished by condensate or grey water.

2. A heater as claimed in claim 1, where the enclosure contains a material undergoes a phase change between 20°C and 60°C.

3. A heater as claimed in claim 2, wherein the enclosure defines a second chamber adjacent a first chamber, wherein the first chamber defines the volume filled with condensate or grey water, and the second chamber contains the phase change material.

4. A heater as claimed in claim 3, in which the first chamber is open at its top to receive condensate from the exhaust gases from the boiler.

5. A heater as claimed in any of the preceding claims, in which an outer wall of the enclosure is non-metallic.

6. A heater as claimed in claim 5, in which the outer wall is formed from one or more of plastics, resin impregnated fibre, cloth, and synthetic materials.

7. A heater as claimed in any of the preceding claims, further comprising a internal tank of potable water.

8. A heater as claimed in claim 7, in which the tank of potable water is connected in series with a liquid flow path in the enclosure.

9. A heater as claimed in any of the preceding claims, further comprising a valve for blending water that has picked up heat from the enclosure with water from a cold main to produce warmed water for supply to the primary heat exchanger.

10. A heater as claimed in claim 1, in which the enclosure is held on an attachment which releasably engages with a cooperating member on the boiler.

11. A heater, comprising a fuel burner, a primary heat exchanger, and a chamber surrounding the burner and heat exchanger and filled with a fluid so as to limit a maximum temperature at an outer wall of the heater, said outer wall being made of a non-metallic water proof material.
